# EUROPÄISCHE PATENTANMELDUNG

(11) **EP 1 619 223 A1**
(43) Veröffentlichungstag der Anmeldung: **25.01.2006**
(21) Anmeldenummer: 04017132.4
(22) Anmeldetag: 21.07.2004
(51) Int. Cl.: C09D 7/12, C09D 1/02, C09D 5/02

(54) **Anstrichmittel für Anstriche an Gebäuden enthaltend Glashohlkugeln**

(71) Anmelder: Gross, Nicole, Diplom-Kauffrau, 46147 Oberhausen (DE)
(72) Erfinder: Gross, Nicole, Diplom-Kauffrau, 46147 Oberhausen (DE)
(74) Vertreter: Rohmann, Michael

(57) **Zusammenfassung**

Anstrichmittel für Anstriche an Gebäuden, wobei eine wässrige Kunststoffdispersion sowie ein Silikon und/oder ein Siloxan enthalten sind und wobei 1 bis 8 Gew.-% Glashohlkugeln enthalten sind.

## Beschreibung

Die Erfindung betrifft ein Anstrichmittel für Anstriche an Gebäuden. Anstrichmittel meint im Rahmen der Erfindung eine streichfähige Farbe, das heißt, dass die Farbe im viskosflüssigen verarbeitungsfähigen Zustand vorliegt. Dass das erfindungsgemäße Anstrichmittel für Anstriche an Gebäuden eingesetzt wird, meint, dass das Anstrichmittel für Innenanstriche oder für Außenanstriche oder für Dachbeschichtungen an Gebäuden verwendet wird.

Die aus der Praxis bekannten Anstrichmittel der eingangs genannten Art weisen eine Mehrzahl von Nachteilen auf. Wird ein aus der Praxis bekanntes Anstrichmittel zur Beschichtung einer Gebäudeaußenwand eingesetzt, so erfolgt bei niedrigen Außentemperaturen in der Regel eine mehr oder weniger unerwünschte Wärmeübertragung aus einem Innenraum des Gebäudes durch die Gebäudeaußenwand an die Außenumgebung. Wenn andererseits aus der Praxis bekannte Anstrichmittel für die Beschichtung einer Innenwand oder für die Beschichtung einer Gebäudeaußenwand eingesetzt werden, so ergibt sich bei hohen Außentemperaturen - beispielsweise im Sommer - eine unerwünscht hohe Erwärmung bzw. Aufheizung der Innenräume. In Räumen, deren Wände bzw. Innenwände mit den bekannten Anstrichmitteln beschichtet werden, lässt das Raumklima normalerweise zu wünschen übrig, weil in dem Innenraum eine ungleichmäßige Temperaturverteilung vorliegt. Die bekannten Anstrichmittel weisen aber noch weitere Nachteile auf. So können in den mit den bekannten Anstrichmitteln erzeugten Beschichtungen Versprödungen und Risse auftreten. Ferner sind ihre feuchteregulierenden Eigenschaften im Hinblick auf Wasserdampfdurchlässigkeit und Wasserabweisung nicht selten unzureichend, wodurch es zur Durchfeuchtung der beschichteten Gebäudewand, der Verschmutzung der Oberfläche oder den Befall durch Mikroorganismen kommen kann. Außerdem lässt manchmal die Haftung der bekannten Anstrichmittel zu wünschen übrig. Die Beschichtungen mit den bekannten Anstrichmitteln sind fernerhin verhältnismäßig anfällig gegenüber mechanischen und chemischen Einflüssen sowie Wettereinflüssen.

Demgegenüber liegt der Erfindung das technische Problem zugrunde, ein Anstrichmittel der eingangs genannten Art anzugeben, mit dem die vorgenannten Nachteile vermieden bzw. reduziert werden können und mit dem Wandbeschichtungen erzeugt werden können, mit denen in Bezug auf die zugeordneten Räume ein optimaler Wärmehaushalt bzw. ein optimales Raumklima verwirklicht werden kann.

Zur Lösung dieses technischen Problems lehrt die Erfindung ein Anstrichmittel für Anstriche an Gebäuden, wobei zumindest eine wässrige Kunststoffdispersion sowie zumindest ein Silikon und/oder zumindest ein Siloxan enthalten sind und wobei 1 bis 8 Gew.-% Glashohlkugeln enthalten sind.

Das erfindungsgemäße Anstrichmittel mit zumindest einem Silikon und/oder zumindest einem Siloxan wird insbesondere für Außenanstriche an Gebäuden eingesetzt. Das heißt, bei diesem Anstrichmittel handelt es sich vorzugsweise um eine Außenwandfarbe zur Beschichtung von Gebäudeaußenwänden. Das Anstrichmittel (gemäß Patentanspruch 1) wird vorzugsweise auch für Dachbeschichtungen verwendet.

Die wässrige Kunststoffdispersion hat zweckmäßigerweise einen Feststoffgehalt von 40 bis 60 Gew.-%, vorzugsweise von 45 bis 55 Gew.-%. Nach sehr bevorzugter Ausführungsform der Erfindung sind in dem Anstrichmittel 5 bis 30 Gew.-%, vorzugsweise 10 bis 28 Gew.-%, bevorzugt 15 bis 25 Gew.-% und sehr bevorzugt 12 bis 25 Gew.-% wässrige Kunststoffdispersion enthalten. Es liegt im Rahmen der Erfindung, dass das Anstrichmittel (gemäß Patentanspruch 1) 2 bis 30 Gew.-%, vorzugsweise 3 bis 25 Gew.-%, zweckmäßigerweise 4 bis 12 Gew.-%, bevorzugt 4 bis 15 Gew.-% und sehr bevorzugt 5 bis 10 Gew.-% zumindest eines Silikons und/oder zumindest eines Siloxans enthält. Das Anstrichmittel mit Silicon und/oder Siloxon hat nach sehr bevorzugter Ausführungsform der Erfindung einen pH-Wert von 7 bis 10, vorzugsweise von 8 bis 9,5. Es liegt im Rahmen der Erfindung, dass der pH-Wert entsprechend eingestellt wird.

Soweit oben und nachfolgend Gew.-%-Angaben aufgeführt werden, so beziehen sich diese Gew.-%-Angaben auf das fertige gesamte Anstrichmittel, und zwar auf das Anstrichmittel im flüssigen streichfähigen Zustand.

Zur Lösung des technischen Problems lehrt die Erfindung weiterhin ein Anstrichmittel für Anstriche an Gebäuden, wobei zumindest eine wässrige Kunststoffdispersion sowie zumindest ein Wasserglas enthalten sind und wobei 1 bis 8 Gew.-% Glashohlkugeln enthalten sind.

Dieses vorgenannte Anstrichmittel (gemäß Patentanspruch 4) eignet sich sowohl für Anstriche von Außenwänden an Gebäuden als auch für Anstriche von Innenwänden in Gebäuden und auch für die Dachbeschichtung von Gebäuden. Dachbeschichtung meint hier und nachfolgend die Außenbeschichtung eines Daches mit dem Anstrichmittel. - Die wässrige Kunststoffdispersion hat auch bei dem Anstrichmittel gemäß Patentanspruch 4 vorzugsweise einen Feststoffgehalt von 40 bis 60 Gew.-%, bevorzugt von 45 bis 55 Gew.-%. Es liegt im Rahmen der Erfindung, dass in dem wasserglashaltigen Anstrichmittel 2 bis 30 Gew.-%, vorzugsweise 3 bis 20 Gew.-%, zweckmäßigerweise 3 bis 15 Gew.-%, bevorzugt 4 bis 12 Gew.-% und sehr bevorzugt 5 bis 10 Gew.-% der wässrigen Kunststoffdispersion enthalten sind. Wasserglas meint im Rahmen der Erfindung bevorzugt Kaliwasserglas. Nach besonders bevorzugter Ausführungsform der Erfindung enthält das wasserglashaltige Anstrichmittel eine wässrige Wasserglaslösung bzw. wurde zur Herstellung des erfindungsgemäßen wasserglashaltigen Anstrichmittels eine wässrige Wasserglaslösung zugesetzt. Es liegt im Rahmen der Erfindung, dass das wasserglashaltige Anstrichmittel 1 bis 25 Gew.-%, vorzugsweise 2 bis 20 Gew.-%, bevorzugt 2 bis 15 Gew.-%, sehr bevorzugt 3 bis 10 Gew.-% und ganz besonders bevorzugt 4 bis 8 Gew.-% einer 25 bis 50 gew.-%igen, vorzugsweise einer 30 bis 45 gew.-%igen wässrigen Wasserglaslösung enthält. Bei dieser wässrigen Wasserglaslösung handelt es sich zweckmäßigerweise um eine wässrige Kaliwasserglaslösung. Das Anstrichmittel mit Wasserglas weist nach sehr bevorzugter Ausführungsform der Erfindung einen pH-Wert von 8,5 bis 11,5, vorzugsweise von 9,5 bis 11 auf.

Nach bevorzugter Ausführungsform, der im Rahmen der Erfindung ganz besondere Bedeutung zukommt, enthält die Kunststoffdispersion des silikonhaltigen bzw. siloxanhaltigen Anstrichmittels oder des wasserglashaltigen Anstrichmittels zumindest einen Kunststoff auf Basis eines Monomers aus der Gruppe "Acrylat, Styrol-Acrylat, Vinylacetat". Bei der Kunststoffdispersion handelt es sich also nach einer Ausführungsform um eine Polyacrylat-Dispersion. Nach einer anderen Ausführungsform handelt es sich bei der Kunststoffdispersion um eine Styrol-Acrylat-Copolymerisat-Dispersion. Eine dritte Ausführungsform ist dadurch gekennzeichnet, dass die Kunststoffdispersion eine Polyvinylacetat-Dispersion ist. In jedem Fall handelt es sich dabei um wässrige Kunststoffdispersionen.

Zur Lösung des oben genannten technischen Problems lehrt die Erfindung fernerhin ein Anstrichmittel für Anstriche an Gebäuden, wobei eine wässrige Kunststoffdispersion auf Basis von Vinylacetat (als Monomer) enthalten ist und wobei 1 bis 8 Gew.-% Glashohlkugeln enthalten sind. Bei dieser Kunststoffdispersion handelt es sich also um eine wässrige Polyvinylacetat-Dispersion. Es liegt im Rahmen der Erfindung, dass das Anstrichmittel gemäß Patentanspruch 8 ausschließlich eine Polyvinylacetat-Dispersion als wässrige Kunststoffdispersion enthält und dass wässrige Kunststoffdispersionen anderer Kunststoffe in dem Anstrichmittel nicht enthalten sind. Das erfindungsgemäße Anstrichmittel auf Basis einer wässrigen Polyvinylacetat-Dispersion ist für Außenanstriche, Innenanstriche und für Dachbeschichtungen an Gebäuden geeignet. Dieses Anstrichmittel auf Basis einer wässrigen Polyvinylacetat-Dispersionen weist vorzugsweise einen pH-Wert von 7 bis 10, bevorzugt von 8 bis 9,5 auf.

Zur Lösung des erfindungsgemäßen technischen Problems lehrt die Erfindung außerdem ein Anstrichmittel für Anstriche an Gebäuden, wobei eine wässrige Kunststoffdispersion auf Basis von Styrol-Acrylat (Monomer) enthalten ist und wobei 1 bis 8 Gew.-% Glashohlkugeln enthalten sind. Die Kunststoffdispersion ist also nach dieser Ausführungsform eine wässrige Dispersion eines Styrol-Acrylat-Copolymerisats. Auch dieses Anstrichmittel auf Basis von Styrol-Acrylat ist für Außenanstriche, Innenanstriche und für Dachbeschichtungen an Gebäuden geeignet. Das Anstrichmittel auf Basis von Styrol-Acrylat weist vorzugsweise einen pH-Wert von 7 bis 10, bevorzugt von 8 bis 9,5 auf.

Es liegt im Rahmen der Erfindung, dass das Anstrichmittel auf Basis von Vinylacetat (Patentanspruch 8) oder das Anstrichmittel auf Basis von Styrol-Acrylat (Patentanspruch 9) 5 bis 60 Gew.-%, vorzugsweise 15 bis 45 Gew.-%, bevorzugt 20 bis 40 Gew.-% wässrige Kunststoffdispersion enthält. Dabei weist die wässrige Kunststoffdispersion zweckmäßigerweise einen Feststoffgehalt von 40 bis 60 Gew.-%, vorzugsweise von 45 bis 55 Gew.-% auf.

Zur Lösung des erfindungsgemäßen technischen Problems lehrt die Erfindung weiterhin ein Anstrichmittel für Anstriche an Gebäuden, wobei 10 bis 50 Gew.-% einer 50 Gew.-%igen wässrigen Kunststoffdispersion auf Basis von Acrylat (Monomer) enthalten ist und wobei 1 bis 8 Gew.-% Glashohlkugeln enthalten sind. Bei dieser Kunststoffdispersion handelt es sich also um eine wässrige Polyacrylat-Dispersion. 50 Gew.-%ige wässrige Kunststoffdispersion meint hier, dass die Kunststoffdispersion 50 Gew.-% Feststoff, d. h. Acrylat und 50 Gew.-% Wasser aufweist. Grundsätzlich bedeutet die Formulierung des Patentanspruches 12, dass die für das Anstrichmittel eingesetzte wässrige Kunststoffdispersion maximal 25 Gew.-% Feststoff bzw. festes Acrylat enthalten soll. Es könnten also auch 50 Gew.-% einer 40 Gew.-%igen wässrigen Kunststoffdispersion (40 Gew.-% Feststoff) eingesetzt werden oder es könnten 60 Gew.-% einer 40 Gew.-%igen wässrigen Kunststoffdispersion (40 Gew.-% Feststoff) eingesetzt werden. Bei der wässrigen Kunststoffdispersion auf Basis von Acrylat gilt also erfindungsgemäß, dass sie nicht mehr als 25 Gew.-% festes Acrylat bzw. Polyacrylat enthalten soll. Das Anstrichmittel auf Basis von Acrylat eignet sich für Außenanstriche, Innenanstriche und Dachbeschichtungen von Gebäuden. Dieses Anstrichmittel auf Basis von Acrylat hat zweckmäßigerweise einen pH-Wert von 7 bis 10 und vorzugsweise einen pH-Wert von 8 bis 9,5. Es liegt im Rahmen der Erfindung, dass dieser pH-Wert entsprechend eingestellt wird.

Es liegt weiterhin im Rahmen der Erfindung, dass das erfindungsgemäße Anstrichmittel - nach den Patentansprüchen 1 bis 12 - (außerdem) 10 bis 45 Gew.-%, vorzugsweise 15 bis 35 Gew.-%, bevorzugt 20 bis 25 Gew.-% Wasser enthält. Dieses letztgenannte Wasser ist also zusätzlich zu dem Wasser der wässrigen Kunststoffdispersion und ggf. zusätzlich zu dem Wasser der wässrigen Wasserglaslösung in dem Anstrichmittel enthalten.

Eine Ausführungsform der Erfindung ist dadurch gekennzeichnet, dass das Anstrichmittel (nach den Patentansprüchen 1 bis 13) 1 bis 7 Gew.-%, vorzugsweise 1 bis 6 Gew.-%, bevorzugt 2 bis 4 Gew.-% Glashohlkugeln enthält. Glashohlkugeln meint Hohlkugeln, deren Wandung aus Glas besteht. Nach ganz besonders bevorzugter Ausführungsform der Erfindung liegt im Inneren der Hohlkugeln bzw. Glashohlkugeln ein Vakuum vor. Die Wandstärke der Glashohlkugeln beträgt vorzugsweise 0,3 bis 5 µm, bevorzugt 0,5 bis 3,5 µm, sehr bevorzugt 0,5 bis 3 µm. Zeckmäßigerweise weisen die Glashohlkugeln einen Durchmesser von 2 bis 150 µm, bevorzugt von 5 bis 150 µm und sehr bevorzugt von 10 bis 140 µm auf. Durchmesser meint hier den Außendurchmesser. Nach bevorzugter Ausführungsform weisen zumindest 50 Vol.-% der Glashohlkugeln einen Durchmesser zwischen 10 und 70 µm, vorzugsweise zwischen 20 und 70 µm auf. Nach einer Ausführungsform der Erfindung bestehen die Glashohlkugeln aus Natronkalk-Borsilikat-Glas. - Nach sehr bevorzugter Ausführungsform beträgt die Dichte der Glashohlkugeln 0,2 bis 0,3 g/cm³. Vorzugsweise beträgt die Dichte der Glashohlkugeln 0,22 bis 0,28 g/cm³, insbesondere 0,25 g/cm³. Dichte meint hier die durchschnittliche Teilchendichte.

In dem erfindungsgemäßen Anstrichmittel sind die Glashohlkugeln gleichsam in einer Polymer-Matrix eingebettet. Die Glashohlkugeln liegen homogen verteilt in dieser Polymer-Matrix vor.

Nach sehr bevorzugter Ausführungsform, der im Rahmen der Erfindung ganz besondere Bedeutung zukommt, sind in dem Anstrichmittel (nach den Patentansprüchen 1 bis 14) 10 bis 30 Gew.-%, vorzugsweise 10 bis 25 Gew.-% und sehr bevorzugt 15 bis 25 Gew.-% zumindest eines Karbonates enthalten. Als Corbonat wird zweckmäßigerweise Calziumcarbonat eingesetzt.

Nach besonders bevorzugter Ausführungsform der Erfindung enthält das erfindungsgemäße Anstrichmittel (nach den Patentansprüchen 1 bis 15) 5 bis 30 Gew.-%, zweckmäßigerweise 5 bis 25 Gew.-%, vorzugsweise 10 bis 20 Gew.-%, bevorzugt 12 bis 16 Gew.-% Titandioxid. Ein erfindungsgemäßes Anstrichmittel mit dem vorstehend angegebenen Gehalt an Titandioxid hat sich besonders bewährt. - Das erfindungsgemäße Anstrichmittel kann weitere Füllstoffe enthalten. Das Anstrichmittel kann fernerhin auch Additive wie Konservierer und/oder Entschäumer enthalten. Diese Additive sind nach einer Ausführungsform der Erfindung zu 0,1 bis 4 Gew.-%, vorzugsweise zu 0,5 bis 3,5 Gew.-% und bevorzugt zu 1,5 bis 3,5 Gew.-% in dem Anstrichmittel enthalten. Außerdem kann in dem Anstrichmittel ein Verdicker vorhanden sein, und zwar zweckmäßigerweise in einer Menge von 0,1 bis 3 Gew.-%, vorzugsweise von 0,1 bis 2 Gew.-% und sehr bevorzugt in einer Menge von 0,1 bis 1 Gew.-%.

Nach ganz bevorzugter Ausführungsform der Erfindung ist das erfindungsgemäße Anstrichmittel lösemittelfrei. Damit ist gemeint, dass das erfindungsgemäße Anstrichmittel keine organischen Lösemittel enthält oder organische Lösemittel nur in vernachlässigbaren Mengen enthält. Lösemittelfrei meint insbesondere, dass der Gehalt an organischem Lösemittel in dem Anstrichmittel kleiner als 1 Gew.-%, vorzugsweise kleiner als 0,7 Gew.-%, bevorzugt kleiner als 0,5 Gew.-% und sehr bevorzugt kleiner als 0,2 Gew.-% ist.

Soweit das erfindungsgemäße Anstrichmittel für Außenanstriche bzw. als Außenwandfarbe an Gebäuden eingesetzt wird, gibt es in diesem Zusammenhang beachtliche hervorzuhebende Vorteile. Eine mit dem Anstrichmittel hergestellte Außenbeschichtung einer Gebäudeaußenwand absorbiert nahezu verlustfrei den nicht reflektierten Teil der Sonnenstrahlung. Aufgrund dieser solaren Wärmegewinne kann der für die Innenräume erforderliche Heizenergiebedarf gesenkt werden. Andererseits überwiegt bei höheren Außentemperaturen, das heißt insbesondere im Sommer, die Eigenschaft, dass das Anstrichmittel sich langsamer erwärmt als bekannte Anstriche. Dadurch wird eine unerwünschte Aufheizung der Innenräume vermieden bzw. der evtl. erforderliche Kühlenergiebedarf kann gesenkt werden. Zu betonen ist weiterhin, dass das erfindungsgemäße Anstrichmittel als Außenanstrich überraschend UV-beständig und wetterbeständig ist. Darüber hinaus zeichnet sich das Anstrichmittel durch eine sehr hohe Langlebigkeit aus und ist in hohem Maße chemisch und mechanisch resistent. Fernerhin werden mögliche Anhaftungen von Pilzen, Moosen und Algen an der Außenwand des Gebäudes durch die Beschichtung effektiv verhindert bzw. reduziert. Das als Außenwandbeschichtung eingesetzte Anstrichmittel ist auch überraschend resistent gegenüber aggressiven Umwelteinflüssen. Ferner zeichnet sich das Anstrichmittel durch sehr gute feuchteregulierende Eigenschaften aus, in dem es stark wasserabweisend und dennoch wasserdampfdurchlässig ist. Durch die Trockenhaltung der Gebäudewand wird nicht nur die Verschmutzung der Oberfläche reduziert. Auch die Wärmedämmung der Wand wird durch die Verhinderung der Durchfeuchtung erhöht, wodurch eine nicht unerhebliche Einsparung von Heizenergie ermöglicht wird.

Auch wenn ein erfindungsgemäßes Anstrichmittel für Innenanstriche bzw. als Innenwandfarbe eines Gebäudes eingesetzt wird, sind damit erhebliche Vorteile verbunden. Eine mit dem Anstrichmittel erzeugte Innenbeschichtung sorgt für eine überraschend schnelle und gleichmäßige Wärmeverteilung in einem Innenraum. Ein solcher Innenraum zeichnet sich durch eine geringe Luftzirkulation und somit eine niedrigere Staubumwirbelung aus. Es resultiert eine wesentlich verbesserte Raumluftqualität. Insgesamt wird durch eine solche Farbbeschichtung das Raumklima des betreffenden Innenraumes beträchtlich verbessert. Besonders bewährt hat sich das erfindungsgemäße Anstrichmittel für Innenanstriche bzw. für die innenseitige Beschichtung von Gebäudeaußenwänden. Dabei wird eine überraschend gleichmäßige Wärmeverteilung in dem zugeordneten Innenraum und ein ausgezeichnetes Raumluftklima erzielt. Besonders überraschend ist auch die gleichmäßige Temperaturverteilung, die an der Innenwand über die gesamte Höhe des Innenraumes erreicht wird. Fernerhin wirkt die erfindungsgemäße Innenwandfarbe effektiv einer Schimmelpilzbildung entgegen und begünstigt durch die beschriebenen Eigenschaften die Einsparung von Heizenergie.

Weiterhin ist der Einsatz des erfindungsgemäßen Anstrichmittels als Dachbeschichtungsmittel mit besonderen Vorteilen verbunden. Die mit dem Anstrichmittel hergestellte Dachbeschichtung reflektiert überraschend effektiv und dauerhaft Sonnenlicht und vermindert insbesondere bei hohen Außentemperaturen, beispielsweise an heißen Tagen im Sommer, die Aufheizung von unmittelbar unter dem beschichteten Dach befindlichen Wohnräumen. Die mit dem Anstrichmittel hergestellte Dachbeschichtung zeichnet sich im Übrigen durch eine hervorragende UV-Beständigkeit und Wetterbeständigkeit aus. Vermoosungen des beschichteten Daches werden durch das erfindungsgemäße Anstrichmittel effektiv verhindert bzw. reduziert.

Unabhängig von dem Einsatzzweck (Außenanstrich, Innenanstrich, Dachbeschichtung) weist das erfindungsgemäße Anstrichmittel aber weitere zu erwähnende Vorteile auf. Zunächst sind die hervorragenden Rissüberbrückungseigenschaften des Anstrichmittels hervorzuheben. Versprödungen, die bei bekannten Anstrichmitteln bereits nach relativ kurzen Zeiträumen feststellbar sind, sind bei Beschichtungen mit dem erfindungsgemäßen Anstrichmittel nicht erkennbar. Außerdem zeichnet sich das erfindungsgemäße Anstrichmittel durch eine exzellente Haftung und durch eine optimale Deckkraft aus. Bezüglich des Brandverhaltens hat das Anstrichmittel wesentliche Vorteile, da das erfindungsgemäße Anstrichmittel überraschend schwer entflammbar ist.

Das Anstrichmittel wird bei Anstrichen von Innenwänden und/oder Außenwänden in einer Schichtdicke von 0,15 bis 0,6 mm, vorzugsweise 0,15 bis 0,5 mm, bevorzugt 0,2 bis 0,35 mm und sehr bevorzugt 0,25 bis 0,3 mm aufgebracht. Schichtdicke des aufgebrachten Anstrichmittels bezieht sich hier und nachfolgend auf den ausgehärteten Zustand des Anstrichmittels. Wenn das erfindungsgemäße Anstrichmittel für eine Dachbeschichtung eingesetzt wird, so erfolgt ein Aufbringen in einer Schichtdicke von 0,3 bis 1,5 mm, vorzugsweise von 0,5 bis 1 mm.

Gegenstand der Erfindung ist auch ein Verfahren zur Beschichtung einer Wand, insbesondere eine Gebäudeaußenwand mit dem erfindungsgemäßen Anstrichmittel, wobei das Anstrichmittel beidseitig auf die Wand bzw. Gebäudeaußenwand aufgebracht wird. Beidseitiges Aufbringen meint bei einer Gebäudeaußenwand, dass die Gebäudeaußenwand sowohl innenseitig als auch außenseitig mit dem Anstrichmittel beschichtet wird. Nach besonders bevorzugter Ausführungsform der Erfindung wird das Anstrichmittel beidseitig mit einer Schichtdicke von 0,15 bis 0,6 mm, vorzugsweise von 0,15 bis 0,5 mm aufgetragen. Gegenstand der Erfindung ist auch eine Wand, insbesondere eine Gebäudeaußenwand, die beidseitig mit dem erfindungsgemäßen Anstrichmittel beschichtet ist. Die beidseitig mit dem erfindungsgemäßen Anstrichmittel beschichtete Wand bzw. Gebäudeaußenwand zeichnet sich durch besondere Vorteile aus. Sowohl der Wärmehaushalt als auch der Feuchtehaushalt der zugeordneten Innenräume können aufgrund der Beschichtung mit dem Anstrichmittel effektiv reguliert werden und die Innenräume zeichnen sich durch ein beachtlich verbessertes Raumklima aus. Mit einer erfindungsgemäß beidseitig beschichteten Wand wird im Winter eine überraschend starke Senkung des Energiebedarfs für die zugeordneten Innenräume erreicht. Das resultiert einerseits daraus, dass bei tieferen Außentemperaturen eine mit der erfindungsgemäßen Farbe hergestellte Außenbeschichtung die Sonnenstrahlung auf effektive Weise absorbiert. Durch diese solaren Wärmegewinne kann der Energiebedarf für die Innenräume reduziert werden. Andererseits bedingt die erfindungsgemäße Beschichtung der Wand, dass die Wärmeübertragung aus den Innenräumen an die Außenumgebung beachtlich vermindert werden kann. Vor allem bei tieferen Außentemperaturen, das heißt insbesondere im Winter, können also Wärmeverluste beachtlich reduziert werden. Bei höheren Außentemperaturen, beispielsweise im Sommer, überwiegen die reflektierenden Eigenschaften der Außenbeschichtung. Aufgrund dieser reflektierenden Eigenschaften findet eine unerwünscht hohe Aufheizung der Innenräume nicht statt und deshalb kann auch der Kühl-Energiebedarf für die Innenräume gesenkt werden. Im Ergebnis zeichnet sich das erfindungsgemäße Anstrichmittel also durch außerordentlich beachtliche Vorteile aus.

## Patentansprüche

1. Anstrichmittel für Anstriche an Gebäuden, wobei zumindest eine wässrige Kunststoffdispersion sowie zumindest ein Silikon und/oder zumindest ein Siloxan enthalten sind und wobei 1 bis 8 Gew.-% Glashohlkugeln enthalten sind.

2. Anstrichmittel nach Anspruch 1, wobei 5 bis 30 Gew.-%, vorzugsweise 10 bis 28 Gew.-%, bevorzugt 12 bis 25 Gew.-% Kunststoffdispersion enthalten sind.

3. Anstrichmittel nach einem der Ansprüche 1 oder 2, wobei 2 bis 30 Gew.- %, vorzugsweise 3 bis 25 Gew.-%, bevorzugt 4 bis 15 Gew.-% Silikon und/oder Siloxan enthalten sind.

4. Anstrichmittel für Anstriche an Gebäuden, wobei zumindest eine wässrige Kunststoffdispersion sowie zumindest ein Wasserglas enthalten sind und wobei 1 bis 8 Gew.-% Glashohlkugeln enthalten sind.

5. Anstrichmittel nach Anspruch 4, wobei 2 bis 30 Gew.-%, vorzugsweise 3 bis 20 Gew.-%, bevorzugt 5 bis 10 Gew.-% Kunststoffdispersion enthalten sind.

6. Anstrichmittel nach einem der Ansprüche 4 oder 5, wobei 1 bis 25 Gew.- %, vorzugsweise 2 bis 20 Gew.-% einer 25- bis 50-gew.-%igen, vorzugsweise einer 30- bis 45-gew.-%igen wässrigen Wasserglaslösung enthalten sind.

7. Anstrichmittel nach einem der Ansprüche 1 bis 6, wobei die Kunststoffdispersion zumindest einen Kunststoff auf Basis eines Monomers aus der Gruppe "Acrylat, Styrol-Acrylat, Vinylacetat" enthält.

8. Anstrichmittel für Anstriche an Gebäuden, wobei eine wässrige Kunststoffdispersion auf Basis von Vinylacetat enthalten ist und wobei 1 bis 8 Gew.-% Glashohlkugeln enthalten sind.

9. Anstrichmittel für Anstriche an Gebäuden, wobei eine wässrige Kunststoffdispersion auf Basis von Styrol-Acrylat enthalten ist und wobei 1 bis 8 Gew.-% Glashohlkugeln enthalten sind.

10. Anstrichmittel nach einem der Ansprüche 8 oder 9, wobei 5 bis 60 Gew.- %, vorzugsweise 15 bis 45 Gew.-%, bevorzugt 20 bis 40 Gew.-% Kunststoffdispersion enthalten sind.

11. Anstrichmittel nach einem der Ansprüche 1 bis 10, wobei eine wässrige Kunststoffdispersion mit 40 bis 60 Gew.-%, vorzugsweise mit 45 bis 55 Gew.-% Feststoffgehalt enthalten ist.

12. Anstrichmittel für Anstriche an Gebäuden, wobei 10 bis 50 Gew.-% einer 50 Gew.-%igen wässrigen Kunststoffdispersion auf Basis von Acrylat enthalten ist und wobei 1 bis 8 Gew.-% Glashohlkugeln enthalten sind.

13. Anstrichmittel nach einem der Ansprüche 1 bis 12, wobei 10 bis 45 Gew.-%, vorzugsweise 15 bis 35 Gew.-%, bevorzugt 20 bis 25 Gew.-% Wasser enthalten sind.

14. Anstrichmittel nach einem der Ansprüche 1 bis 13, wobei 1 bis 7 Gew.- %, vorzugsweise 1 bis 6 Gew.-%, bevorzugt 2 bis 4 Gew.-% Glashohlkugeln enthalten sind.

15. Anstrichmittel nach einem der Ansprüche 1 bis 14, wobei 10 bis 30 Gew.-%, vorzugsweise 15 bis 25 Gew.-% Carbonat, zweckmäßigerweise Calziumcarbonat enthalten sind.

16. Anstrichmittel nach einem der Ansprüche 1 bis 1%, wobei 5 bis 30 Gew.-%, vorzugsweise 10 bis 20 Gew.-%, bevorzugt 12 bis 16 Gew.-% Titandioxid enthalten sind.
